# EUROPÄISCHE PATENTANMELDUNG

(11) **EP 2 818 218 A1**
(43) Veröffentlichungstag der Anmeldung: **31.12.2014**
(21) Anmeldenummer: 14172495.5
(22) Anmeldetag: 16.06.2014
(51) Int. Cl.: A63H 27/00, B64C 27/08

(54) **Multikopterausleger**

(30) Priorität: 27.06.2013 DE 202013102796 U; 25.09.2013 DE 102013015908
(71) Anmelder: Schmidkonz, Robert, 93128 Regenstauf (DE)
(72) Erfinder: Schmidkonz, Robert, 93128 Regenstauf (DE)
(74) Vertreter: Graf Glück Kritzenberger

(57) **Zusammenfassung**

Die Erfindung betrifft einen Multikopterausleger umfassend einen länglichen Hohlkörperprofilabschnitt (6) und ein jeweils freiendseitig an den Hohlkörperprofilabschnitt (6) anschließender erster und zweiter Befestigungsabschnitt (7, 8). Besonders vorteilhaft ist das Querschnittsprofil des länglichen Hohlkörperprofilabschnittes (6) als strömungsoptimiertes Tragflächenprofil ausgebildet.

## Beschreibung

Die Erfindung betrifft einen Multikopterausleger gemäß dem Oberbegriff des Schutzanspruches 1.

Multikopter sind ferngesteuerte Fluggeräte, welche mehrere Rotoreinheiten aufweisen, welche vorzugsweise in einer Ebene angeordnet sind und über jeweils einen Kopterausleger mit einem Koptergrundkörper verbunden sind. Die Rotoreinheiten wirken hierbei im Wesentlichen senkrecht zur Mittenebene des Koptergrundkörpers. Am weitesten verbreitet sind sog. Quadrokopter, welche vier in einer Ebene angeordnete Rotoreinheiten aufweisen.

Bekannte Kopterausleger sind vorzugsweise durch längliche Trägerelemente mit einem kreisförmigen oder rechteckförmigen Querschnitt gebildet. Nachteilig wird durch derartig ausgebildete Kopterausleger ein Teil der Auftriebsleistung der Rotoreinheiten verbraucht, so dass die Flugzeit handelsüblicher Multikopter sehr kurz ist und nur wenige Minuten beträgt.

Ausgehend von dem voranstehend genannten Stand der Technik liegt der Erfindung die Aufgabe zugrunde, einen Multikopterausleger aufzuzeigen, welcher die Nachteile des Standes der Technik beseitigt, insbesondere eine erhöhte Flugzeit eines Multikopters und/oder eine Reduzierung der Leistungsauslegung der Rotoreinheiten bei gleichbleibender Flugzeit ermöglicht. Die Aufgabe wird durch einen Multikopterausleger gemäß dem Patentanspruch 1 gelöst.

Der wesentliche Aspekt des erfindungsgemäßen Multikopterauslegers ist darin zu sehen, dass der Multikopterausleger ein längliches Hohlkörperprofilabschnitt aufweist und das Querschnittsprofil des länglichen Hohlkörperprofilabschnittes als strömungsoptimiertes Tragflächenprofil ausgebildet ist. Unter einem strömungsoptimierten Tragflächenprofil im Sinne der Erfindung wird hierbei jede Querschnittsprofilform verstanden, welche geeignet ist, bei Anströmung des Profils entlang dessen Mittenebene einen äußerst geringen Strömungswiderstand aufzuweisen. Besonders vorteilhaft wird somit die durch die jeweilige Rotoreinheit eines Multikopters erzeugte Auftriebskraft nicht durch den Strömungswiderstand des Multikopterauslegers reduziert. Besonders vorteilhaft kann hierdurch die Flugzeit von Multikoptern deutlich erhöht werden und/oder Rotoreinheiten mit einer reduzierten Motorleistung und dadurch reduzierten Energieverbrauch eingesetzt werden. Zusätzlich wird durch das erfindungsgemäße strömungsoptimierte Tragflächenprofil eine Reduzierung von durch Windströmung hervorgerufene Luftverwirbelungen erreicht. Dadurch liegt der Multikopter bei schnellem Abstieg stabiler in der Luft, und zwar tritt aufgrund des erfindungsgemäß strömungsoptimierten Tragflächenprofils der so genannte "Downwash"-Effekt zumindest nicht mehr so stark auf. Der "Downwash"-Effekt führt bei einem schnellen Abstieg zum Wackeln des Multikopters, insbesondere bei einem Abstieg durch eine Zone verdichteter und gleichzeitig stark verwirbelter Luft. Auch bietet das strömungsoptimierte Tragflächenprofil des Multikopterausleger den durch den Propeller der jeweiligen Rotoreinheit erzeugten "Windschlägen" keine Angriffsfläche mehr, d.h. eine aufgrund der Aufprallenergie der Windschläge erzeugte Erschütterung bzw. dadurch bedingte Vibrationen des Multikopterauslegers können wesentlich reduziert werden. Derartige Vibrationen sind insbesondere störend bei Verwendung eines Multikopters zur Erzeugung von Luftbildaufnahmen, da aufgrund der Vibrationen mittels der auf dem Multikopter montierten Kameraeinheit keine scharfen Bilder erzeugt werden können. Darüber hinaus haben Versuche gezeigt, dass nur durch Ersetzen des handelsüblichen Multikopterauslegers durch die erfindungsgemäßen Multikopterausleger eine deutliche Erhöhung der Flugzeit erreicht werden konnte.

In einer bevorzugten Ausführungsvariante ist der Multikopterausleger aus Karbon oder glasfaserverstärkten Kunststoff hergestellt. Der erste freienseitige Befestigungsabschnitt ist zur Befestigung des Multikopterauslegers an einem Multikoptergrundkörper eines Multikopters und der zweite freienseitige Befestigungsabschnitt zur Aufnahme und Befestigung einer Rotoreinheit eines Multikopters ausgebildet. Vorteilhaft sind hierbei die freiendseitigen Befestigungsabschnitte in zwei parallel zueinander verlaufenden Aufnahmeebenen angeordnet.

In einer bevorzugten Ausführungsvariante schließt der längliche Hohlkörperprofilabschnitt mit den Aufnahmeebenen einen Winkel zwischen 15° und 30° ein und ist symmetrisch zu einer Profilebene ausgebildet, wobei das Tragflächenprofil in Bezug auf die Profilmittenebene eine Profilbreite und eine Profilhöhe aufweisen, und zwar vorzugsweise mit einem Verhältnis von 3:1. Ferner sind die Ober- und Unterkante des strömungsoptimierten Tragflächenprofils relativ scharf, d.h. mit einem sehr geringen Radius ausgeführt, wodurch der Luftstrom effektiv geteilt werden kann. Die Dimensionierung der Profilbreite und der Profilhöhe ist hierbei abhängig von Größe und Gewicht des Multikopters und/oder der Leistung und Gewicht der Rotoreinheiten.

In einer vorteilhaften Ausführungsvariante ist der längliche Hohlkörperprofilabschnitt über einen Übergangsabschnitt mit dem ersten freiendseitigen Befestigungsabschnitt verbunden, über welchen das Querschnittsprofil des Befestigungsabschnittes in das Tragflächenprofil kontinuierlich übergeht. Mittels des Übergangsabschnitts erfolgt eine strömungsoptimierte Anpassung der unterschiedlichen Querschnittsprofile.

Gegenstand der Erfindung ist ebenfalls ein Multikopter umfassend zumindest einen Multikopterkörper und mehrere jeweils über einen Multikopterausleger mit dem Multikopterkörper verbundene Rotoreinheiten. Vorteilhaft ist jeweils ein Multikopterausleger durch ein längliches Hohlkörperprofilabschnitt gebildet, dessen Querschnittsprofil als strömungsoptimiertes Tragflächenprofil ausgebildet ist.

Weiterhin vorteilhaft weist eine Rotoreinheit zumindest einen Rotor und zum Antrieb des Rotors um eine Rotationsachse zumindest eine Motoreinheit, insbesondere eine Elektromotoreinheit auf, wobei die Drehzahl der Motoreinheit individuell einstellbar ist.

In einer vorteilhaften Ausführungsvariante umfasst eine Rotoreinheit zwei gegenüberliegende Motoreinheiten zum voneinander unabhängigen Antrieb zweier gegenüberliegender Rotoren einer Rotoreinheit, welche in zueinander entgegengesetzt verlaufenden Drehrichtungen von der jeweils zugeordneten Motoreinheit angetrieben werden, wobei die Drehzahl der beiden Motoreinheiten einer Rotoreinheit unabhängig voneinander individuell einstellbar ist.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine vereinfachte perspektivische Darstellung eines Multikopters mit mehreren erfindungsgemäß ausgebildeten Multikopterauslegern,
- Fig. 2: eine Draufsicht auf einen erfindungsgemäß ausgebildeten Multikopterauslegern,
- Fig. 3: eine Seitenansicht auf einen erfindungsgemäß ausgebildeten Multikopterauslegern,

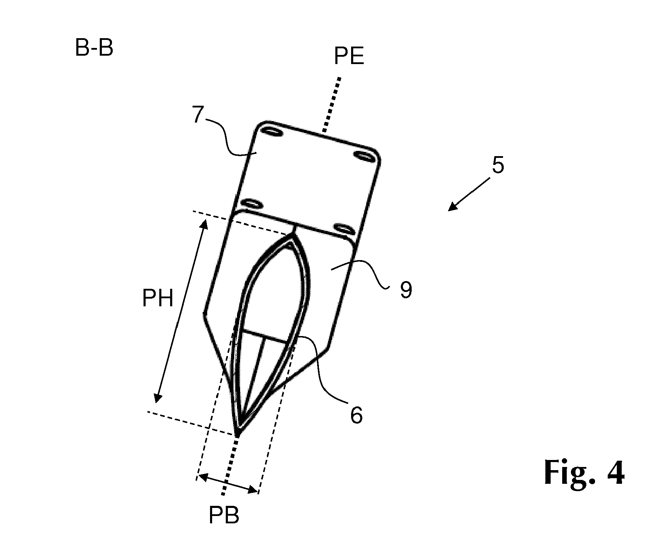

- Fig. 4: ein Schnitt entlang der Linie B-B durch den erfindungsgemäß ausgebildeten Multikopterausleger gemäß Figur 3 und
- Fig. 5: eine vereinfachte perspektivische Darstellung eines Oktokopters mit mehreren erfindungsgemäß ausgebildeten Multikopterauslegern.

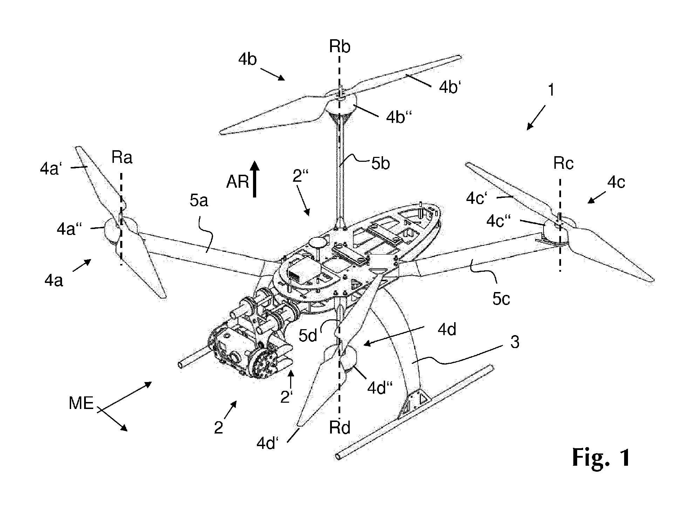

In Fig. 1 ist beispielhaft eine perspektivische Darstellung eines Multikopters 1 dargestellt, welcher einen Multikopterkörper 2 mit beispielsweise zwei gegenüberliegenden an der Unterseite 2' des Multikopterkörpers 2 befestigten kufenartigen Standbeinen 3 aufweist.

Der Multikopter 1 weist im vorliegenden Ausführungsbeispiel eine erste bis vierte Rotoreinheit 4a - 4d auf, welche mehrere jeweils um eine vertikale Rotationsachse Ra bis Rd drehende Rotorblätter aufweist. Die Rotationsachsen Ra bis Rd verlaufen hierbei vorzugsweise senkrecht zur horizontalen Mittenebene ME des Multikopterkörpers 2. Mittels der Rotoreinheit 4a - 4d wird jeweils eine entlang der Rotationsachsen Ra bis Rd bzw. senkrecht zur horizontalen Mittenebene ME des Multikopterkörpers 2 wirkende Auftriebskraft erzeugt, welche den Multikopter 1 bei entsprechender Ansteuerung der Rotoreinheiten 4a - 4c einen Auftrieb und damit ein Abheben vom Boden ermöglicht. Die Antriebsrichtung AR des Multikopters 1 verläuft damit im Wesentlichen senkrecht zur horizontalen Mittenebene ME des Multikopterkörpers 2.

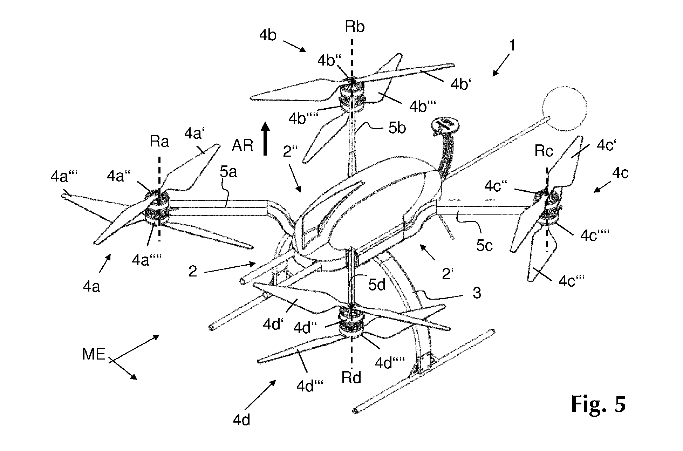

Der im vorliegenden Ausführungsbeispiel dargestellte Multikopter 1 ist somit als Quadrokopter ausgebildet. Es versteht sich, dass die Erfindung auch auf Multikopter 1 mit einer unterschiedlichen Anzahl an Rotoreinheiten 4a - 4d verwendbar ist ohne das hierdurch der Erfindungsgedanken verlassen wird. Insbesondere können auch entlang einer gemeinsamen Rotationsachse zwei Rotoreinheiten montiert sein. Ein derartiger pro Rotoreinheit 4a - 4d jeweils zwei gegenüberliegende Rotoren 4a' - 4d' und 4a"' - 4d"' und zugehörige Motoreinheiten 4a" - 4d" und 4a"" - 4d"" ist beispielhaft in Figur 5 in einer perspektivischen Abbildung dargestellt. Ein derartig ausgeführter Multikopters 1 mit acht Rotoren 4a' - 4d' und 4a"' - 4d"' wird auch als Oktokopter bezeichnet.

In einer vorteilhaften Ausführungsvariante gemäß Figur 1 umfasst eine Rotoreinheit 4a - 4d jeweils zumindest einen Rotor 4a' - 4d' sowie zumindest einen zum Antrieb des Rotors vorgesehene Motoreinheit, vorzugsweise Elektromotoreinheit 4a" - 4d". Die Elektromotoreinheit 4a' - 4d' ist vorzugsweise drehzahlgesteuert ausgebildet und treibt den Rotor 4a' - 4d' der jeweiligen Rotoreinheit 4a - 4d um die jeweilige Rotationsachse Ra bis Rd in einer ersten Drehrichtung an.

In einer in Figur 5 dargestellten, alternativen Ausführungsvariante weist jede der Rotoreinheit 4a - 4d eine weitere Motoreinheit, vorzugsweise Elektromotoreinheit 4a""-4d"" auf, die ebenfalls drehzahlgesteuert ist und zum Antrieb eines weiteren Rotors 4a"'-4d"' um die jeweilige Rotationsachse Ra bis Rd ausgebildet ist. Die Drehrichtung der weiteren Rotors 4a"' - 4d"' ist hierbei entgegengesetzt zum gegenüberliegend angeordneten Rotor 4a' - 4d' der jeweiligen Rotoreinheit 4a - 4d. Hierbei sind die Drehzahlen der beiden Motoreinheiten einer 4a" - 4d"und 4a"" - 4d"" einer Rotoreinheit 4a - 4d unabhängig voneinander einstellbar, vorzugsweise ferngesteuert. Vorzugsweise sind die Rotoren 4a' - 4d' und 4a"' - 4d"' einer Rotoreinheit 4a - 4d in parallel zueinander verlaufenden Rotationsebenen angeordnet, welche jeweils senkrecht zu den Rotationsachsen Ra bis Rd verlaufen.

Die erste bis vierte Rotoreinheit 4a - 4c ist jeweils über einen Multikopterausleger 5a - 5d mit dem Multikopterkörper 2 verbunden, und zwar vorzugsweise im Bereich der Oberseite 2" des Multikopterkörpers 2. Im vorliegenden Ausführungsbeispiel sind ein erster bis vierter Multikopterausleger 5a - 5d vorgesehen, wobei die erste Rotoreinheit 4a über den ersten Multikopterausleger 5a, die zweite Rotoreinheit 4b über den zweiten Multikopterausleger 5b, die dritte Rotoreinheit 4c über den dritten Multikopterausleger 5c und die vierte Rotoreinheit 4d über den vierten Multikopterausleger 5d mit dem Multikopterkörper 2 verbunden ist. Hierzu erstreckt sich der jeweilige Multikopterausleger 5a - 5d ausgehend von der Oberseite 2" des Multikopterkörpers 2 leicht schräg nach außen und nach oben, wobei vorzugsweise eine sternförmige Anordnung der Multikopterausleger 5a - 5d vorgesehen ist.

Ein Multikopterausleger 5 umfasst jeweils einen länglichen Hohlkörperprofilabschnitt 6 und freiendseitig an den Hohlkörperprofilabschnittes 6 anschließende Befestigungsabschnitte 7, 8. Der Hohlkörperprofilabschnitt 6 und die Befestigungsabschnitte 7,8 bilden einen einstückig ausgebildeten Multikopterausleger 5, welcher vorzugsweise aus einem leichten Kunststoffmaterial, beispielsweise Karbon oder glasfaserverstärkten Kunststoff hergestellt ist.

Der Multikopterausleger 5 weist einen ersten freiendseitigen Befestigungsabschnitt 7 zur Befestigung des Multikopterauslegers 5 am Multikopterkörper 2 und einen zweiten, gegenüberliegenden zweiten freiendseitigen Befestigungsabschnitt 8 zur Aufnahme und Befestigung der Rotoreinheit 4a - 4d am Multikopterausleger 5 auf.

Erfindungsgemäß weist der längliche Hohlkörperprofilabschnitt 6 ein einem strömungsoptimierten Tragflächenprofil entsprechendes Querschnittsprofil auf, d.h. der längliche Hohlkörperprofilabschnitt 6 weist eine entlang der Antriebsrichtung AR des Multikopters 1 orientierte strömungsoptimierte Silhouette auf, welche über die von der jeweiligen Rotoreinheit 4a - 4d erzeugte Strömung angeströmt wird. Aufgrund der strömungsoptimierten Silhouette des Tragflächenprofils ist der Strömungswiderstand entlang der Antriebsrichtung AR erheblich reduziert, wodurch keine Leistung der Rotoreinheiten 4a - 4d verschwendet wird und störende Luftverwirbelungen vermieden werden können, d.h. der Multikopter 1 weist ein wesentlich stabileres Flugverhalten bei reduzierten Energieverbrauch auf.

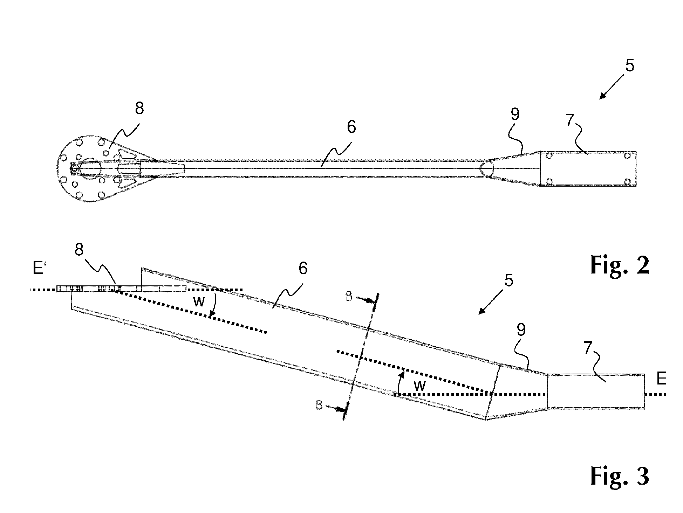

Im vorliegenden Ausführungsbeispiel ist der erste freiendseitige Befestigungsabschnitt 7 beispielsweise in Form eines Tragprofils mit einem quadratischen Querschnitt ausgebildet, welches in Form eines Hohlkörpers ausgebildet ist. Der erste freiendseitige Befestigungsabschnitt 7 geht über einen Übergangsabschnitt 9 in den länglichen Hohlkörperprofilabschnitt 6 über, an dessen gegenüberliegenden Ende der in Form einer Befestigungsplatte ausgebildete zweite freiendseitige Befestigungsabschnitt 8 vorgesehen ist. Mittels des Übergangsabschnittes 9 ergibt sich ein kontinuierlicher Übergang zwischen dem Querschnittsprofil des ersten Befestigungsabschnittes 7 in das strömungsoptimierte Tragflächenprofil. Der plattenartige zweite freiendseitige Befestigungsabschnitt 8 verläuft im Wesentlichen parallel zum ersten freiendseitigen Befestigungsabschnitt 7. Hierbei schließt der zwischen dem beiden Befestigungsabschnitten 7, 8 angeordnete längliche Hohlkörperprofilabschnitt 6 mit der jeweiligen Aufnahmeebene E, E' der Befestigungsabschnitte 7, 8 beispielsweise eine Winkel w zwischen 0° und 45°, vorzugsweise zwischen 15° und 30° ein. In den Figuren 2 und 3 ist beispielhaft ein erfindungsgemäßer Multikopterausleger 5 in einer schematischen Draufsicht und Seitenansicht dargestellt.

Die Befestigungsabschnitte 7, 8 weisen beispielsweise eine Vielzahl an Bohrungen, auch Gewindebohrungen zur Befestigung dessen am Multikopterkörper 2 bzw. der Rotoreinheiten 4a - 4d auf, vorzugsweise mittels Schraubmittel.

Der längliche Hohlkörperprofilabschnitt 6 des Multikopterauslegers 5 ist vorzugsweise symmetrisch zu einer Profilmittenebene PE ausgebildet, welche beispielsweise senkrecht zu den Aufnahmeebene E, E' der Befestigungsabschnitte 7, 8 verläuft. Das strömungsoptimierte Tragflächenprofil des länglichen Hohlkörperprofilabschnitts 6 erstreckt sich beispielsweise in der Profilmittenebene PE über eine Profilhöhe PH und eine Profilbreite PB, wobei das Verhältnis von Profilhöhe PH zu Profilbreite PB vorzugsweise 3:1 beträgt. Durch die Hochkant-Ausrichtung in vertikaler Richtung des strömungsoptimierten Tragflächenprofils weist der Multikopterausleger 5 eine höhere Biegestabilität auf.

Durch die Ausbildung des länglichen Hohlkörperprofilabschnittes 6 und des ersten Befestigungsabschnittes 7 in Form eines Hohlkörpers ist die Zuführung der für den Betrieb der Rotoreinheiten 4a - 4d erforderlichen elektrischen Energie mittels entsprechender Verbindungskabel problemlos möglich.

Alternativ kann jedoch auf der Multikopterausleger 5 im Bereich des länglichen Hohlkörperprofilabschnittes 6 mit einer Füllung versehen sein, um dadurch zusätzlich die Biegestabilität des Multikopterauslegers 5 zu erhöhen. Vorzugsweise kann der Hohlraum des Multikopterauslegers 5 beispielsweise mit einem Leicht-PU-Schaum ausgespritzt werden.

In einer alternativen Ausführungsvariante kann der Multikopterausleger 5 auch in Seitenansicht gekröpft bzw. doppelt gekröpft ausgebildet sein, d.h. der längliche Hohlkörperprofilabschnitt 6 weist zwei parallel zueinander in den Aufnahmeebene E, E' verlaufende freie Endabschnitte auf. Figur 5 zeigt eine entsprechende Ausführungsvariante.

Neben einem deutlich geringeren Gewicht des Multikopters 1 ergibt sich besonders vorteilhaft ein deutlich verbessertes Auftriebsverhalten eines Multikopters 1 aufgrund des erfindungsgemäßen Multikopterausleger 5 sowie ein deutlich reduzierter Energieverbrauch, so dass ein mit einem erfindungsgemäßen Multikopterausleger 5 ausgestatteter Multikopter 1 im Vergleich zu aus dem Stand der Technik bekannten Multikoptern 1 eine deutlich längere Flugzeit aufweist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Multikopter
- 2: Multikopterkörper
- 2': Unterseite
- 2": Oberseite
- 3: Standbeine
- 4a-4d: erste bis vierte Rotoreinheit
- 4a' - 4d': Rotoren
- 4a"' - 4d"': weitere Rotoren
- 4a" - 4d": Motoreinheiten
- 4a"" - 4d"": weitere Motoreinheiten
- 5, 5a-5d: erster bis vierter Multikopterausleger
- 6: länglicher Hohlkörperprofilabschnitt
- 7: erster freienseitiger Befestigungsabschnitt
- 8: zweiter freienseitiger Befestigungsabschnitt
- 9: Übergangsabschn itt

- ME: Mittenebene
- E: Aufnahmeebene
- E': Aufnahmeebene
- PE: Profilebene
- Ra-Rd: Rotationsachsen
- w: Winkel

## Patentansprüche

1. Multikopterausleger (5) umfassend einen länglichen Hohlkörperprofilabschnitt (6) und ein jeweils freiendseitig an den Hohlkörperprofilabschnitt (6) anschließender erster und zweiter Befestigungsabschnitt (7, 8), **dadurch gekennzeichnet, dass** das Querschnittsprofil des länglichen Hohlkörperprofilabschnittes (6) als strömungsoptimiertes Tragflächenprofil ausgebildet ist.

2. Multikopterausleger nach Anspruch 1, **dadurch gekennzeichnet, dass** der Multikopterausleger (5) aus einem leichten Kunststoffmaterial, vorzugsweise Karbon oder glasfaserverstärkten Kunststoff hergestellt ist.

3. Multikopterausleger nach Anspruch 1 oder 2, **dadurch gekennzeichnet, dass** der erste freienseitige Befestigungsabschnitt (7) zur Befestigung des Multikopterausleger (5) an einem Multikopterkörper (2) eines Multikopters (1) ausgebildet ist.

4. Multikopterausleger nach einem der Ansprüche 1 bis 3, **dadurch gekennzeichnet, dass** der zweite freienseitige Befestigungsabschnitt (8) zur Aufnahme und Befestigung einer Rotoreinheit (4a - 4d) eines Multikopters (1) ausgebildet ist.

5. Multikopterausleger nach einem der Ansprüche 1 bis 4, **dadurch gekennzeichnet, dass** die freienseitige Befestigungsabschnitte (7, 8) in zwei parallel zueinander verlaufenden Aufnahmeebenen (E, E') angeordnet sind.

6. Multikopterausleger nach 5, **dadurch gekennzeichnet, dass** der längliche Hohlkörperprofilabschnitt (6) mit den Aufnahmeebenen (E, E') einen Winkel (w) zwischen 0° und 45°, vorzugsweise zwischen 15° und 30° einschließt.

7. Multikopterausleger nach einem der Ansprüche 1 bis 6, **dadurch gekennzeichnet, dass** das Tragflächenprofil des länglichen Hohlkörperprofilabschnittes (6) symmetrisch zu einer Profilebene (PE) ausgebildet ist.

8. Multikopterausleger nach Ansprüche 7, **dadurch gekennzeichnet, dass** das Tragflächenprofil sich in Bezug auf die Profilmittenebene (PE) über eine Profilbreite (PB) und eine Profilhöhe (PH) erstreckt, welche vorzugsweise ein Verhältnis von 3:1 aufweisen.

9. Multikopterausleger nach einem der Ansprüche 1 bis 8, **dadurch gekennzeichnet, dass** der längliche Hohlkörperprofilabschnitt (6) über einen Übergangsabschnitt (9) mit dem ersten freiendseitigen Befestigungsabschnitt (7) verbunden ist, über welchen das Querschnittsprofil des Befestigungsabschnittes (7) in das Tragflächenprofil kontinuierlich übergeht.

10. Multikopter (1) umfassend zumindest einen Multikopterkörper (2) und mehrere jeweils über einen Multikopterausleger (5a - 5d) mit dem Multikopterkörper (2) verbundene Rotoreinheiten (4a - 4c), **dadurch gekennzeichnet, dass** die Multikopterausleger (5a - 5d) nach einem der vorhergehenden Ansprüche ausgebildet sind.

11. Multikopter (1) nach Anspruch 10, **dadurch gekennzeichnet, dass** eine Rotoreinheit (4a - 4d) zumindest einen Rotor (4a' - 4d') und zum Antrieb des Rotors (4a' - 4d') um eine Rotationsachse (Ra - Rd) zumindest eine Motoreinheit, insbesondere eine Elektromotoreinheit (4a" - 4d") aufweist, wobei die Drehzahl der Motoreinheit (4a" - 4d") individuell einstellbar ist.

12. Multikopter (1) nach Anspruch 11, **dadurch gekennzeichnet, dass** eine Rotoreinheit (4a - 4d) jeweils zwei Rotoren (4a' - 4d';4a"' - 4d"') mit jeweils einer zugeordneten Motoreinheit, insbesondere einer Elektromotoreinheit (4a" - 4d", 4a"" - 4d"") aufweist, wobei die Drehzahl der beiden Motoreinheiten (4a" - 4d", 4a"" - 4d"") unabhängig voneinander individuell einstellbar ist.
